(19) Europäisches Patentamt
European Patent Office
Office européen des brevets

(11) **EP 3 894 800 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **19808759.5**

(22) Anmeldetag: **21.11.2019**

(51) Internationale Patentklassifikation (IPC):
**G01F 1/667** (2022.01)

(52) Gemeinsame Patentklassifikation (CPC):
**G01F 1/667**

(86) Internationale Anmeldenummer:
**PCT/EP2019/082015**

(87) Internationale Veröffentlichungsnummer:
**WO 2020/120091 (18.06.2020 Gazette 2020/25)**

(54) **ULTRASCHALLWANDLERANORDNUNG EINER CLAMP-ON-ULTRASCHALL-DURCHFLUSSMESSSTELLE, UND EINE CLAMP-ON-ULTRASCHALL-DURCHFLUSSMESSSTELLE SOWIE VERFAHREN ZUR INBETRIEBNAHME DER CLAMP-ON-ULTRASCHALL-DURCHFLUSSMESSSTELLE**

ULTRASONIC TRANSDUCER ARRANGEMENT FOR A CLAMP-ON ULTRASONIC FLOW MEASURING POINT AND A CLAMP-ON ULTRASONIC FLOW MEASURING POINT AND METHOD FOR PUTTING THE CLAMP-ON ULTRASONIC FLOW MEASURING POINT INTO OPERATION

ENSEMBLE DE TRANSDUCTEURS ULTRASONORES D'UN POINT DE MESURE DE DÉBIT À ULTRASONS DU TYPE "CLAMP-ON", AINSI QUE POINT DE MESURE DE DÉBIT À ULTRASONS DU TYPE "CLAMP-ON" ET PROCÉDÉ DE MISE EN SERVICE DUDIT POINT DE MESURE DE DÉBIT À ULTRASONS DU TYPE "CLAMP-ON"

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2018   DE 102018132053**

(43) Veröffentlichungstag der Anmeldung:
**20.10.2021   Patentblatt 2021/42**

(73) Patentinhaber: **Endress + Hauser Flowtec AG 4153 Reinach (CH)**

(72) Erfinder:
• **GRUNWALD, Sascha 79585 Steinen (DE)**
• **BRUMBERG, Oliver 79618 Rheinfelden (DE)**
• **MURRAY, Alexander 4059 Basel (CH)**
• **BERGER, Andreas 4228 Erschwil (CH)**
• **WIEST, Achim 79576 Weil am Rhein (DE)**

(74) Vertreter: **Penner, Paul Endress + Hauser Group Services (Deutschland) AG+Co. KG PatServe Colmarer Straße 6 79576 Weil am Rhein (DE)**

(56) Entgegenhaltungen:
EP-A1- 2 891 866          WO-A1-95/17650
DE-A1-102008 029 772    US-A1- 2016 327 419

**Beschreibung**

Clamp-On-Ultraschall-Durchflussmessstellen werden anstelle von Inline-Durchflussmessstellen mit in einem Messrohr integrierten Ultraschallwandlern eingesetzt, wenn ein Einbau eines Messrohrs einer Inline-Durchflussmessstelle umständlich oder unmöglich ist. Clamp-On-Ultraschall-Durchflussmessstellen sind deutlich einfacher einzurichten und an verschiedenen Messrohren einsetzbar, weisen jedoch den Nachteil auf, dass Ultraschallwandler einer solchen Messstelle ab Werk allenfalls grob aufeinander eingestellt werden können.

Der Stand der Technik zeigt Ultraschallwandleranordnungen von solchen Durchflussmessstellen, bei welchen die Ultraschallwandler verschiebbar zueinander eingerichtet sind, um eine Feineinstellung durchführen zu können. Dies erfordert jedoch Fachkenntnisse und auch einen gewissen Zeitaufwand. Eine Umgehung dieser Problematik wird in der DE102008029772A1 vorgestellt, bei welcher zwei Gruppen jeweils mehrerer Ultraschallwandler auf einer Außenseite eines Messrohrs angebracht sind, wobei benachbarte Ultraschallwandler einer jeweiligen Gruppe kleine Abstände zueinander aufweisen, wobei diese Abstände zwischen den jeweiligen Gruppen leicht unterschiedlich sind. Dadurch wird erreicht, dass aufgrund einer Vielzahl von Ultraschallwandlern in vielen Fällen ein durch einen Ultraschallsignalpfad verbundenes Ultraschallwandlerpaar existiert und somit kleine Änderungen von Prozessparametern wie beispielsweise Schallgeschwindigkeit durch Wechsel des Ultraschallwandlerpaars kompensiert werden können.

Aufgabe der Erfindung ist es, eine Ultraschallwandleranordnung einer Clamp-On Ultraschall-Durchflussmessstelle und eine Clamp-On-Ultraschall-Durchflussmessstelle vorzuschlagen, bei welcher die Ultraschallwandleranordnung weitgehend unabhängig von einem Messrohrdurchmesser einsetzbar ist.

Die Aufgabe wird gelöst durch eine Ultraschallwandleranordnung gemäß dem unabhängigen Anspruch 1, sowie einer Clamp-On-Ultraschall-Durchflussmessstellegemäß dem unabhängigen Anspruch 7.

Eine erfindungsgemäße Ultraschallwandleranordnung einer Clamp-On-Ultraschall-Durchflussmessstelle basierend auf dem Laufzeitdifferenzenprinzip umfasst:

mehrere Ultraschallwandler, welche dazu eingerichtet sind, auf einer Außenseite eines Messrohrs der Clamp-On-Durchflussmessstelle angeordnet zu werden,

wobei die Ultraschallwandler jeweils mindestens ein Wandlerelement zum Erzeugen und/oder

Empfangen von Ultraschallsignalen sowie ein Koppelelement aufweisen, wobei das Koppelelement eine erste Kontaktfläche und eine zweite Kontaktfläche aufweist, wobei das Wandlerelement auf der ersten Kontaktfläche angeordnet ist, und wobei der Ultraschallwandler dazu eingerichtet ist, mittels der zweiten Kontaktfläche mit dem Messrohr kontaktiert zu werden,

wobei die Ultraschallwandler dazu eingerichtet sind, Ultraschallsignale in das Messrohr einzustrahlen und/oder aus dem Messrohr austretende Ultraschallsignale zu aufzunehmen,

wobei die zweiten Kontaktflächen jeweils eine Normale aufweisen, wobei die Normalen eine Ebene definieren, in welcher Ebene Ultraschallsignalpfade der Ultraschallsignale verlaufen,

wobei erste Ultraschallwandler parallel zueinander verlaufende erste Ultraschallsignalpfade definieren, und wobei zweite Ultraschallwandler parallel zueinander verlaufende zweite Ultraschallsignalpfade definieren, wobei die Ultraschallsignalpfade in der Ebene verlaufen,

wobei die Ultraschallsignalpfade der ersten Ultraschallwandler sowie der zweiten Ultraschallwandler im Koppelelement jeweils schräg zur zweiten Kontaktfläche verlaufen,

wobei eine Richtung der ersten Ultraschallsignalpfade und eine Richtung der zweiten Ultraschallsignalpfade spiegelsymmetrisch zu einer der Normalen sind,

wobei erste Ultraschallsignalpfade mit zweiten Ultraschallsignalpfaden Kreuzungspunkte in der Ebene definieren, wobei die Kreuzungspunkte Parallelen besetzen, welche Parallelen in der Ebene senkrecht zu den Normalen verlaufen,

wobei eine erste Gruppe zusammenhängender Ultraschallwandler ausschließlich erste Ultraschallwandler mit einer ersten Anzahl aufweist, und wobei eine zweite Gruppe zusammenhängender Ultraschallwandler ausschließlich zweite Ultraschallwandler mit einer zweiten Anzahl aufweist,

wobei benachbarte Ultraschallwandler der ersten Gruppe in Richtung der Parallelen jeweils erste Abstände A1 zueinander aufweisen, und wobei benachbarte Ultraschallwandler der zweiten Gruppe in Richtung der Parallelen jeweils zweite Abstände A2 zueinander aufweisen, wobei der erste Abstand und der zweite Abstand ungleich sind,

dadurch gekennzeichnet, dass

$2*A1 >= A2 >= 1.125*A1$, und insbesondere $1.75*A1 >= A2 >= 1.16*A1$, und bevorzugt $1.6*A1 >= A2 >= 1.25*A1$.

Zusammenhängend bedeutet, dass zwischen Ultraschallwandlern einer Gruppe keine weiteren Ultraschallwandler angeordnet sind.

Die vorliegende Erfindung entspricht ein Zusammenhang zwischen erstem Abstand A1 und zweitem Abstand A2 nach folgender Gleichung:

(a+1)*A1 =a*A2 mit b > a > 1, a natürliche Zahl und b kleiner 9, und insbesondere kleiner 7, und bevorzugt kleiner 5.

Vorteilhaft ist die erste Anzahl und/oder die zweite Anzahl größer a.

In einer Ausgestaltung weisen die Ultraschallwandler jeweils eine Längsachse auf, wobei die Längsachse jeweils einen Innenwinkel $\alpha$ zur entsprechenden zweiten Kontaktfläche aufweisen, wobei der Ultraschallsignalpfad im Koppelelement entlang der Längsachse verläuft,

$$rA > 3/(8*a)*A1*cos(\alpha),$$

und insbesondere

$$rA > 1/(4*a)*A1*cos(\alpha).$$

In einer Ausgestaltung weist die Ultraschallwandleranordnung mindestens eine dritte Gruppe Ultraschallwandler mit zumindest einen ersten Ultraschallwandler und/oder zumindest einen zweiten Ultraschallwandler auf,

wobei mindestens ein mit einem ersten Ultraschallwandler der dritten Gruppe und/oder mit einem zweiten Ultraschallwandler der dritten Gruppe gebildeter Kreuzungspunkt eine mächtigste erste Menge äquidistanter Parallelen erweitert.

Die mächtigste erste Menge ist dadurch gekennzeichnet, dass benachbarte Parallelen zugehörig zur mächtigsten Menge jeweils einen gleichen Abstand zueinander aufweisen und dass die Menge im Vergleich zu anderen Mengen äquidistanter Parallelen die meisten Parallelen aufweist.

In einer Ausgestaltung umfasst die Ultraschallwandleranordnung zumindest einen dritten Ultraschallwandler, welcher einen Signalpfad aufweist, welcher senkrecht zur zweiten Kontaktfläche verläuft.

In einer Ausgestaltung weist die Anordnung einen Trägerkörper zum Halten der Ultraschallwandler auf.

In einer Ausgestaltung sind die Ultraschallwandler im Trägerkörper jeweils einzeln gehalten.

Eine erfindungsgemäße Clamp-On-Ultraschall-Durchflussmessstelle zum Messen einer Durchflussgeschwindigkeit eines durch ein Messrohr strömenden Mediums umfasst:

das Messrohr zum Führen eines Mediums mit einer Messrohrachse,
eine erfindungsgemäße Ultraschallwandleranordnung, wobei die Ultraschallwandleranordnung parallel zur Messrohrachse ausgerichtet ist,
eine elektronische Mess- und Betriebsschaltung zum Betreiben der Ultraschallwandler sowie zum Ermitteln und Bereitstellen von Messwerten der Durchflussgeschwindigkeit.

In einer Ausgestaltung umfasst die Clamp-On-Ultraschall-Durchflussmessstelle einen Krümmungssensor zur Bestimmung eines Außendurchmessers des Messrohrs,

wobei der Krümmungssensor einen Abstandssensor und einen Abstandshalter aufweist,
wobei der Abstandshalter einen Zentralbereich und zwei an den Zentralbereich anschließende Enden aufweist, wobei die Enden durch eine Biegung oder einen Knick oder einen Winkel vom Zentralbereich abgegrenzt sind,
wobei der Abstandshalter dazu eingerichtet ist, mittels der Enden mit dem Messrohr kontaktiert zu werden, wobei der Zentralbereich dazu eingerichtet ist, vom Messrohr beabstandet zu sein, und
wobei ein Querschnitt bzw. Längsschnitt durch den Abstandshalter durch beide Enden dazu eingerichtet ist, parallel zu einem Messrohrquerschnitt zu verlaufen,
wobei der Abstandssensor im Zentralbereich am Abstandshalter angeordnet ist,
wobei die elektronische Mess-/Betriebsschaltung dazu eingerichtet ist, den Abstandssensor zu betreiben.

In einer Ausgestaltung ist der Abstandssensor ein optischer oder akustischer Abstandssensor.

Bei einem Verfahren zur Inbetriebnahme der Clamp-On-Ultraschall-Durchflussmessstelle, welches Verfahren nicht Teil von dem Gegenstand der Ansprüche ist, senden mehrere erste Ultraschallwandler / mehrere zweite Ultraschallwandler gleichzeitig oder zeitlich versetzt jeweils ein Ultraschallsignal aus, welche von zweiten Ultraschallwandlern / ersten Ultraschallwandlern empfangen werden,

wobei die elektronische Mess-/Betriebsschaltung anhand von Signalstärke und/oder Signal/Rauschen-Verhältnis der empfangenen Ultraschallsignale zumindest ein für einen Messbetrieb zu verwendendes Ultraschallwandlerpaar bestimmt.

In einer Ausgestaltung, nicht Teil von dem Gegenstand der Ansprüche ist, sind die Ultraschallsignale quasikontinuierlich und sich in ihrer Frequenz unterscheiden,

oder wobei die Ultraschallsignale gepulst sind und sich in folgendem Merkmal unterscheiden:
Zentralfrequenz eines Frequenzspektrums.

In einer Ausgestaltung, nicht Teil von dem Gegenstand der Ansprüche ist, wird ein Medium durch das Messrohr geführt,

wobei bei empfangenen Ultraschallsignalen Ultraschallsignalanteile auf ein Vorhandensein einer Laufzeitdifferenz untersucht werden,

wobei Ultraschallsignalanteile ohne Laufzeitdifferenz bei der Bestimmung eines zu verwendenden Ultraschallwandlerpaars ausgeschlossen werden.

Bei einem Verfahren, das nicht Teil von dem Gegenstand der Ansprüche ist, wird der dritte Ultraschallwandler dazu veranlasst, ein Ultraschallsignal auszusenden und zu empfangen,

wobei die elektronische Mess-/Betriebsschaltung einen Außendurchmesser und/oder Innendurchmesser anhand von mindestens einer Signaleigenschaft des empfangenen Ultraschallsignals bestimmt,
wobei nutzbare Signaleigenschaften beispielsweise sind:
Laufzeit.

Bei einem Verfahren, das nicht Teil von dem Gegenstand der Ansprüche ist, bestimmt die elektronische Mess-/Betriebsschaltung einen Außendurchmesser mittels des Krümmungssensors zur Bestimmung eines Außendurchmessers.

Im Folgenden wird die Erfindung anhand von Ausführungsbeispielen beschrieben.

Fig. 1 skizziert zwei Ultraschallwandler einer erfindungsgemäßen Anordnung;
Fig. 2 skizziert geometrische Zusammenhänge einer erfindungsgemäßen Anordnung von Ultraschallwandlern;
Fig. 3 skizziert eine Verteilung von Kreuzungspunkten;
Fig. 4 skizziert Ergänzungsmöglichkeiten einer mächtigsten ersten Menge äquidistanter Parallelen;
Fig. 5 skizziert verschiedene Ultraschallsignalpfade in einem Messrohr in Abhängigkeit von einem Messrohrdurchmesser;
Fig. 6 skizziert eine beispielhafte erfindungsgemäße Anordnung von Ultraschallwandlern;
Fig. 7 skizziert eine Anordnung in einem Trägerkörper;
Fig. 8 skizziert eine Durchflussmessstelle mit einer erfindungsgemäßen Anordnung;
Fig. 9 skizziert einen Krümmungssensor.

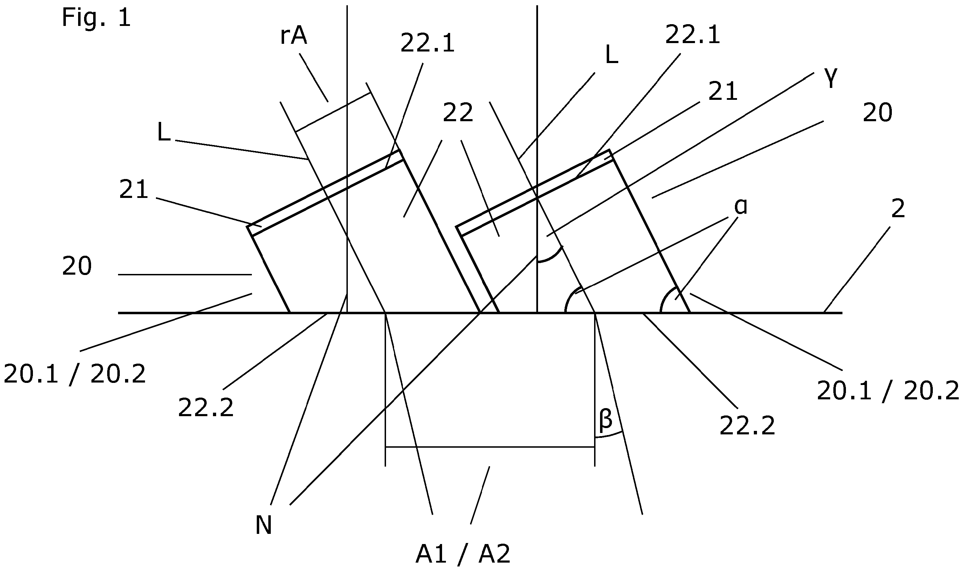

Fig. 1 skizziert einen schematischen Aufbau von beispielhaften Ultraschallwandlern 20 und einen Teil einer erfindungsgemäßen Anordnung umfassend zwei erste Ultraschallwandler 20.1 bzw. zwei zweite Ultraschallwandler 20.2, welche an einer Außenseite eines Messrohrs 2 angeordnet sind. Ein Ultraschallwandler weist jeweils mindestens ein Wandlerelement 21, bevorzugt ein piezoelektrisches Wandlerelement und ein Koppelelement 22, wobei das Wandlerelement an einer ersten Kontaktfläche 22.1 des Koppelelements angeordnet ist, und wobei das Koppelelement über eine zweite Kontaktfläche 22.2 mit dem Messrohr akustisch und mechanisch gekoppelt ist. Das Koppelelement weist eine Längsachse L auf, entlang welcher vom Wandlerelement 21 erzeugte, oder über die Kontaktfläche 22.2 aufgenommene Ultraschallsignale sich fortbewegen. Das Wandlerelement ist bevorzugt scheibenförmig und weist eine radiale Ausdehnung rA auf. Die radiale Ausdehnung des Wandlerelements entspricht nicht notwendigerweise einer radialen Ausdehnung des Koppelelements, in Fig. 1 ist dies aus zeichnerischen Gründen dargestellt. Die Längsachse weist gegenüber einer Normalen N der zweiten Kontaktfläche einen Winkel $\gamma$ auf, so dass Ultraschallsignale schräg in das Messrohr eingekoppelt werden. Im Messrohr weist ein Ultraschallsignalpfad einen Winkel $\beta$ zur Normalen auf, welcher Winkel $\beta$ im Allgemeinen unterschiedlich zum Winkel $\gamma$ ist, sobald eine Schallgeschwindigkeit im Koppelelement anders ist als eine Schallgeschwindigkeit im Medium. Benachbarte erste Ultraschallwandler 20.1 weisen einen ersten Abstand A1 zueinander auf. Entsprechendes gilt für benachbarte zweite Ultraschallwandler, welche einen zweiten Abstand A2 zueinander aufweisen.

Typische Werte für den Winkel $\gamma$ sind 30° bis 45° abhängig von den für das Koppelement sowie Messrohr verwendeten Materialien und vom durch das Messrohr strömenden Medium.

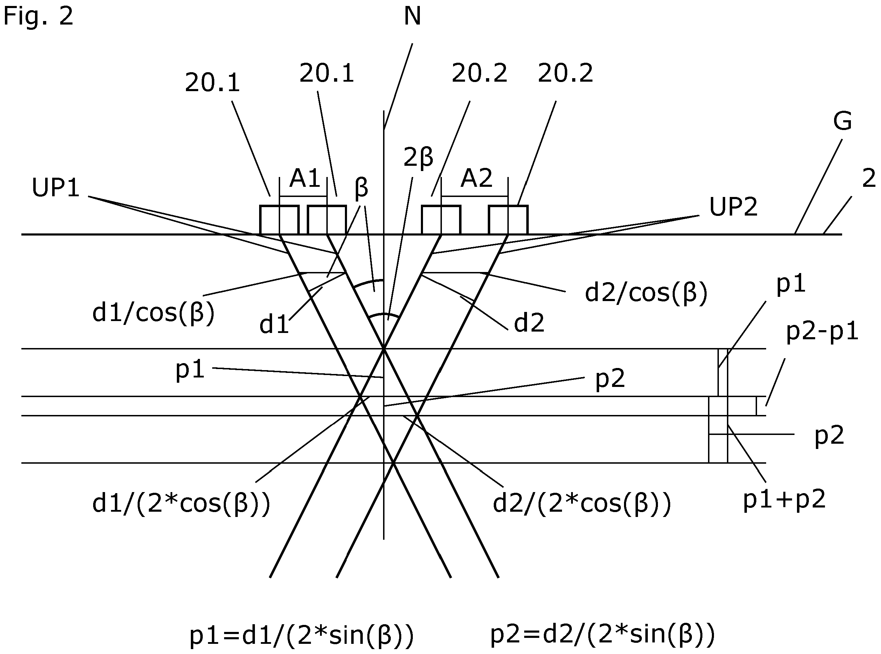

Fig. 2 skizziert Verläufe von zueinander parallelen ersten Ultraschallsignalpfaden UP1 und zueinander parallelen zweiten Ultraschallsignalpfaden UP2 im Messrohr 2, welche von zwei ersten Ultraschallwandlern 20.1 und zwei zweiten Ultraschallwandlern 20.2 ausgehen und in einer Ebene verlaufen, wobei jedes Paar erster Ultraschallsignalpfad - zweiter Ultraschallsignalpfad spiegelsymmetrisch zu einer Normalen N einer zweiten Kontaktfläche verlaufen. Die Ultraschallsignalpfade kreuzen sich und spannen ein Netz von Kreuzungspunkten auf, welche in der Ebene liegen. Kreuzungspunkte auf einem ersten Ultraschallsignalpfad UP1 weisen auf die Normale N projiziert einen Abstand $p2=d2/(2*sin(\beta))$ auf, wobei d2 gleich dem Abstand benachbarter zweiter Ultraschallsignalpfade UP2 ist. Entsprechend gilt, dass Kreuzungspunkte auf einem zweiten Ultraschallsignalpfad UP2 auf die Normale N projiziert einen Abstand $p1=d1/(2*sin(\beta))$ aufweisen, wobei d1 gleich dem Abstand benachbarter erster Ultraschallsignalpfade UP1 ist. Ein Minimalabstand zweier auf die Normale projizierte Kreuzungspunkte beträgt p2 - p1.

Die Anzahlen der Ultraschallwandler, ihre Anordnungen zueinander sowie die gewählten Winkel sind nicht einschränkend auszulegen und haben einen rein darstellerischen Zweck. Eine hier vernachlässigte Wandstärke des Messrohrs 2 beeinflusst einen Schalleintrittspunkt in das Medium relativ zum Koppelelement. Ein Fachmann wird dies gegebenenfalls berücksichtigen.

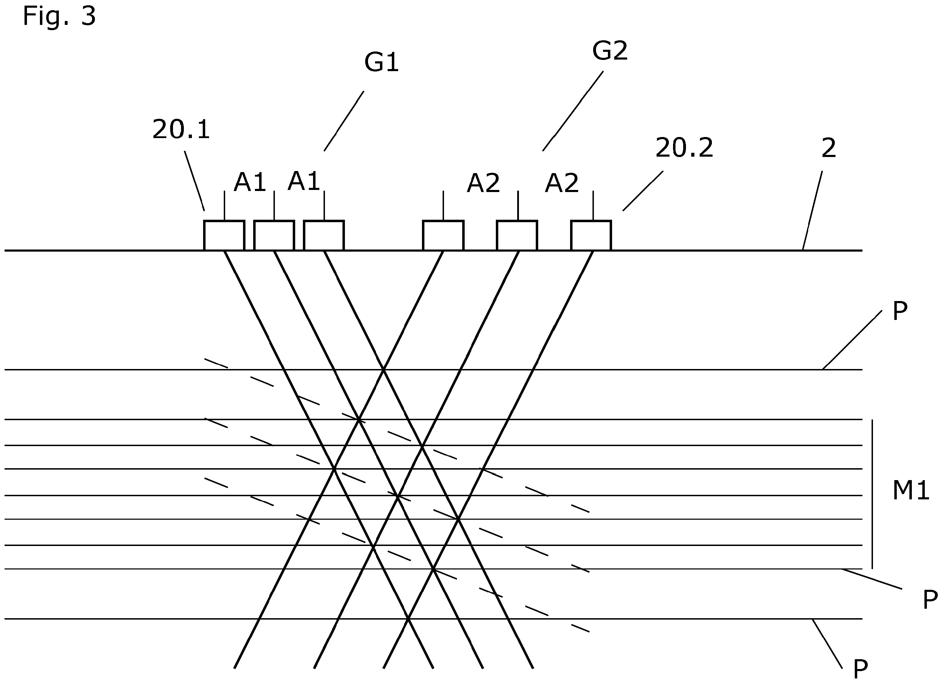

Fig. 3 skizziert ein Netz von Kreuzungspunkten, welches durch eine erste Gruppe G1 von zusammenhängenden ersten Ultraschallwandlern mit drei ersten Ul-

traschallwandlern 20.1 sowie durch eine zweite Gruppe G2 von zusammenhängenden zweiten Ultraschalwandlern mit drei zweiten Ultraschallwandlern 20.2 aufgespannt wird. Bei gleichgroßen Abständen A1 und A2 hätte das Netz die Form einer Raute, wobei einige Kreuzungspunkte einen gleichen Abstand zu einer Wandung des Messrohrs 2 aufwiesen. Aufgrund unterschiedlicher Abstände A1 und A2 ist die Raute verzerrt, also ein Parallelogramm, so dass Kreuzungspunkte mit anderenfalls gleichem Abstand zu einer Messrohrwandung nun jeweils entlang einer zur Messrohrwandung schiefen Gerade angeordnet sind, wie mittels der gestrichelten Linien angedeutet. Bei gleichen Anzahlen Anz1 erster Ultraschallwandler der ersten Gruppe G1 und Anz 2 zweiter Ultraschallwandler der zweiten Gruppe G2 liegen auf einer zentralen schiefen Gerade der Anzahl der ersten Ultraschallwandler entsprechend viele Kreuzungspunkte, und auf benachbarten schiefen Geraden jeweils ein Kreuzungspunkt weniger. Für den Fall, dass für die Abstände A1 und A2 folgender Zusammenhang gilt: (a+1)*A1=a*A2 mit b > a > 1, a und b natürliche Zahlen und dass weiter gilt: Anz1 bzw. Anz2 größer oder gleich a+1, dann liegen die Kreuzungspunkte der zentralen schiefen Geraden und zumindest der benachbarten schiefen Geraden auf äquidistanten Parallelen zur Messrohrwandung bzw. Messrohrachse und definieren eine mächtigste erste Menge M1 äquidistanter Parallelen. Weitere Mengen äquidistanter Parallelen sind durch einen größeren Abstand als der Abstand benachbarter äquidistanter Parallelen von der Menge M1 beabstandet. Eine Menge äquidistanter Parallelen kann auch nur eine Parallele umfassen, welche zu sich selbst parallel und äquidistant ist.

Die Abstände der Parallelen zu den Ultraschallwandlern sind abhängig von einem Abstand der ersten Gruppe zur zweiten Gruppe. Ein Heranschieben der zweiten Gruppe an die erste Gruppe hat eine Verringerung der Abstände der Parallelen zu den Ultraschallwandlern zur Folge. In diesem Fall könnte die Anordnung an Messrohren mit kleinem Durchmesser eingesetzt werden.

Die Anzahlen der Ultraschallwandler, ihre Anordnungen zueinander sowie die gewählten Winkel sind nicht einschränkend auszulegen und haben einen rein darstellerischen Zweck.

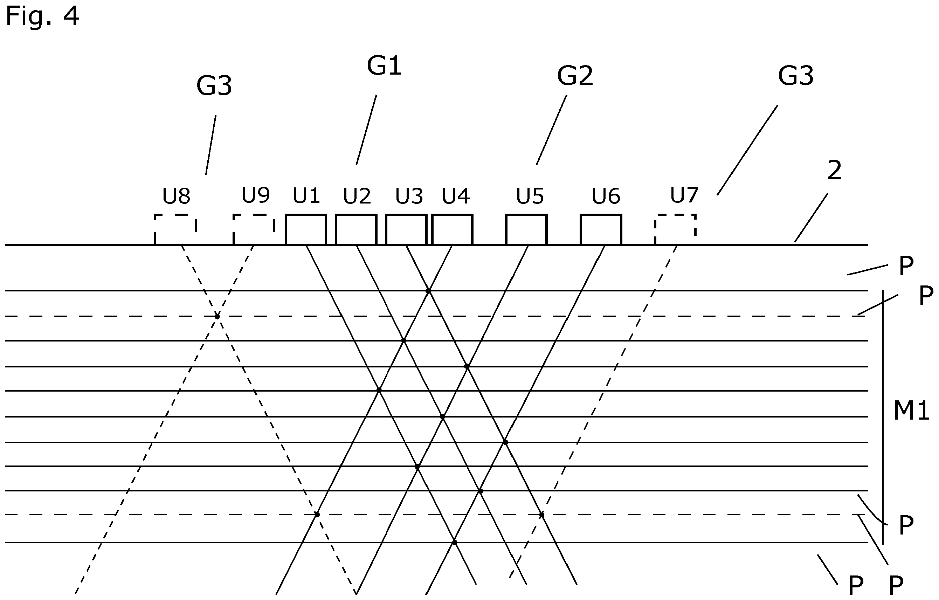

Fig. 4 skizziert, wie die mächtigste erste Menge M1 durch Hinzufügen weiterer Ultraschallwandler erweitert werden kann. Die erste Gruppe erste Ultraschallwandler G1 umfassend die Ultraschallwandler U1 bis U2 sowie die zweite Gruppe Ultraschallwandler G2 umfassend die Ultraschallwandler U4 bis U6 spannen gemäß Fig. 3 ein Netz von Kreuzungspunkten auf, wobei Kreuzungspunkte eine erste Menge M1 äquidistanter Parallelen P besetzen, und wobei Kreuzungspunkte Parallelen P besetzen, welche nicht zur Menge M1 gehören. Die Lücke zwischen einer nicht zur Menge M1 gehörigen Parallele und einer zur Menge M1 gehörigen Parallele ist ein ganzzahliges Vielfaches benachbarter Parallelen der Menge M1. Mittels mindestens einer dritten Gruppe Ultraschallwandler G3 beispielsweise umfassend den Ultraschallwandler U7 und oder die Ultraschallwandler U8 und U9 kann die Menge M1 erweitert werden, wie durch die gestrichelt dargestellten Parallelen gezeigt.

Entsprechendes lässt sich auch auf Ultraschallwandleranordnungen erweitern, bei welchen die erste Gruppe Ultraschallwandler und/oder die zweite Gruppe Ultraschallwandler mehr als drei Ultraschallwandler aufweisen.

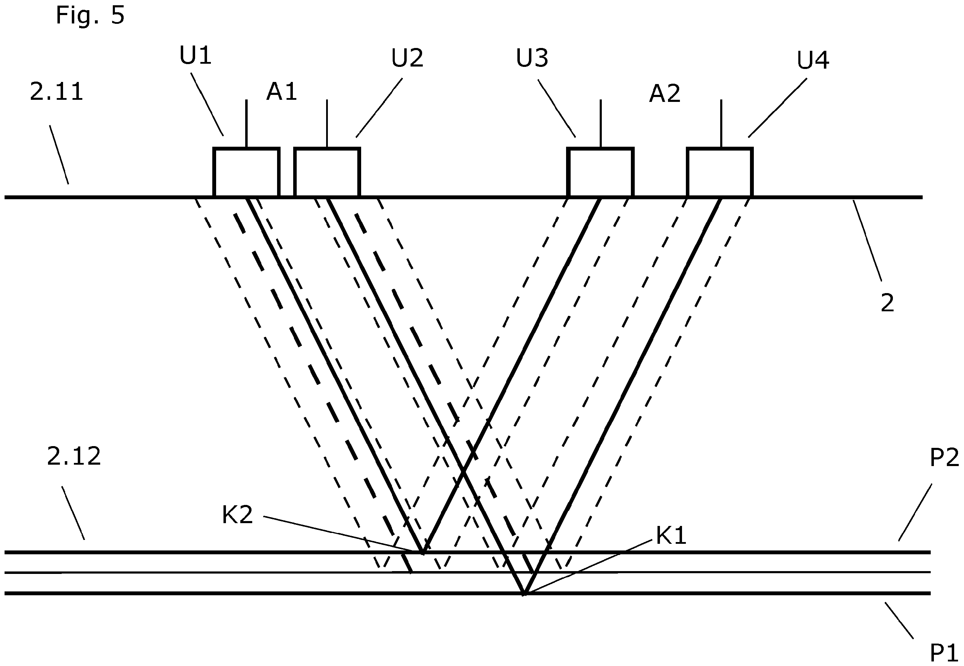

Fig. 5 skizziert Ultraschallsignalpfade abhängig vom Messrohrdurchmesser. Ultraschallsignale, welche auf einer ersten Seite des Messrohrs 2.11 in das Messrohr eingestrahlt werden, werden auf einer zweiten Seite des Messrohrs 2.12 auf einer Innenseite der Messrohrwandung reflektiert. Für den Fall, dass die Innenseite des Messrohrs der zweiten Seite mit einer Parallelen P1 zusammenfällt, überlagert sich ein Ultraschallsignalpfad ausgehend von einem ersten Ultraschallwandler / zweiten Ultraschallwandler mit dem Ultraschallsignalpfad eines zweiten Ultraschallwandlers / ersten Ultraschallwandlers, so dass ein Ultraschallsignal ausgehend von einem ersten Ultraschallwandler / zweiten Ultraschallwandler von einem zweiten Ultraschallwandler / ersten Ultraschallwandler empfangen werden kann. Dies ist skizziert durch den Ultraschallsignalpfad zwischen Ultraschallwandler U2 und Ultraschallwandler U4 mittels der durchgezogenen Linie, welche im Kreuzungspunkt K1 an der Parallelen P1 gespiegelt ist.

Für den Fall, dass die Innenseite des Messrohrs der zweiten Seite nicht mit einer Parallelen P1 zusammenfällt, sind Ultraschallsignalpfade der Ultraschallwandler U2 und U4 zueinander versetzt, was bei dem jeweils empfangenden Ultraschallwandler eine verminderte Ultraschallsignalamplitude zur Folge hat. Dies ist angedeutet durch die dick gestrichelten Linien für ein Ultraschallsignal ausgehend von U4.

Für den Fall, dass die Innenseite des Messrohrs der zweiten Seite mit einer Parallelen P2 zusammenfällt, überlagern sich die Ultraschallsignalpfade der Ultraschallwandler U1 und U3.

Falls die Innenseite der zweiten Seite des Messrohrs zwischen den Parallelen P1 und P2 liegt und gleichweit von beiden Parallelen entfernt ist, liegt eine maximale relevante Abweichung der Innenwand von einer der Parallelen P1 und P2 vor. Falls die Innenwand näher an P1 läge, hätte dies ein besseres Übereinstimmen der Ultraschallsignalpfade der Ultraschallwandler U2 und U4 zur Folge. Falls die Innenwand näher an P2 läge, hätte dies ein besseres Übereinstimmen der Ultraschallsignalpfade der Ultraschallwandler U1 und U3 zur Folge. Dies ist mittels der dünn gestrichelten Linien ausgehend von U3 zu U1 und ausgehend von U4 zu U2 demonstriert, welche unter Vernachlässigung einer praktisch auftretenden Aufweitung eine Ultraschallsignalbreite skizzieren. Bei Reflektion an der exakt zwischen P1 und P2 verlaufenden Innenwand treffen die Ultraschallsignale nicht mehr zentral auf den entsprechenden empfangenden Ultraschallwandler sondern versetzt, wobei der Versatz bei beiden Ultraschallsignalpfaden gleich groß ist.

Bevorzugt weisen die Wandlerelemente eine radiale Ausdehnung rA (siehe Fig. 1) auf, wobei $rA > 3/(8*a)*A1*\cos(\gamma)$ und insbesondere $rA > 1/(4*a)*A1*\cos(\gamma)$, bzw $rA > 3/(8*a)*A1*\sin(\alpha)$ und insbesondere $rA > 1/(4*a)*A1*\sin(\alpha)$, mit $(a+1)*A1=a*A2$.

Eine Ultraschallsignalaufweitung außer Acht lassend hätte eine maximale relevante Abweichung in diesem Fall einen Versatz eines Ultraschallsignalpfads entlang der Messrohrachse bzw. entlang einer Parallelen P von einem Drittel einer Ultraschallsignalbreite parallel zur Messrohrachse zu Folge. Es hat sich gezeigt, dass in diesem Fall eine Ultraschallsignalamplitude bei einem zum Empfang bestimmten Ultraschallwandler noch ausreichend für eine gute Signalverarbeitung ist.

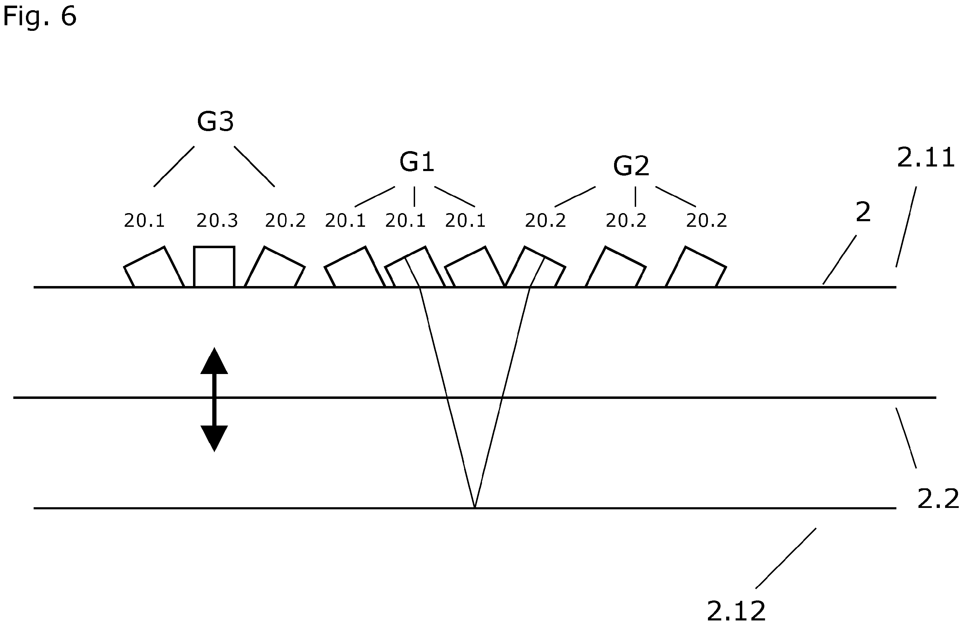

Fig. 6 skizziert eine beispielhafte erfindungsgemäße Anordnung von Ultraschallwandlern an einem Messrohr 2, wobei eine erste Gruppe G1 von Ultraschallwandlern sowie eine zweite Gruppe G2 von Ultraschallwandlern G2 jeweils drei erste Ultraschallwandler 20.1 bzw. drei zweite Ultraschallwandler 20.2 aufweist. Zusätzlich weist die Anordnung eine dritte Gruppe G3 Ultraschallwandler mit einem ersten Ultraschallwandler 20.1 und einem zweiten Ultraschallwandler 20.2 auf, mittels welchen die mächtigste Menge äquidistanter Parallelen wie in Fig. 4 skizziert erweitert wird. Zusätzlich kann die Ultraschallwandleranordnung wie hier gezeigt einen dritten Ultraschallwandler 20.3 aufweisen, welcher dazu eingerichtet ist, Ultraschallsignale senkrecht zur Messrohrachse auszustrahlen und diese anschließend nach Reflektion an der Innenseite des Messrohrs auf der zweiten Seite 2.12 zu empfangen. Mittels mindestens einer gemessenen Signallaufzeit eines Ultraschallsignals kann auf den Messrohrdurchmesser und eine Messrohrwandstärke rückgeschlossen werden und ein zu verwendendes Ultraschallwandlerpaar bestimmt werden. Hierbei kann ausgenutzt werden, dass an jeder Grenzfläche zwischen zwei verschiedenen Medien Reflektionen auftreten. So kann eine erste Reflektion eines Ultraschallsignals für eine Wandstärkenbestimmung genutzt werden, und eine zweite Reflektion für eine Messrohrdurchmesserbestimmung. Ein Fachmann wird dabei auf ein ihm bekanntes Signalauswertungsverfahren zurückgreifen.

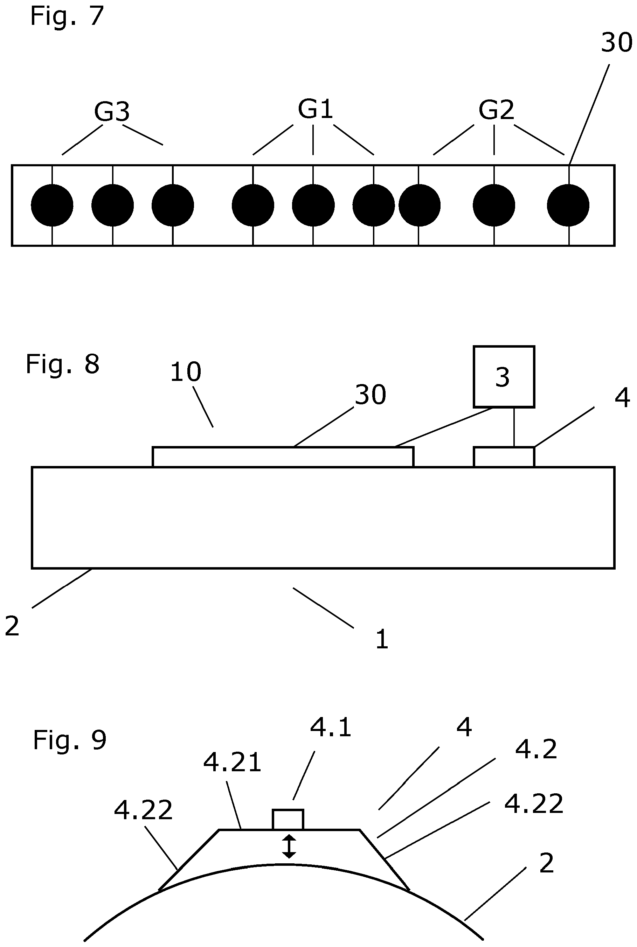

Fig. 7 skizziert Ultraschallwandler, welche in einem Trägerkörper 30 angeordnet und durch diesen gehalten sind. Der Trägerkörper kann Positionierelemente aufweisen, mittels welcher die Ultraschallwandler beim Einbau in den Trägerkörper in einer Sollposition positionierbar sind. Nach Positionierung können die Ultraschallwandler im Trägerkörper vergossen werden. Die Ultraschallwandler können im Trägerkörper beispielsweise einzeln gehalten sein, so dass eine Anpassung an eine beispielsweise raue oder unebene Messrohroberfläche möglich ist. Diese Skizze ist bezüglich der Anzahl und Anordnung der Ultraschallwandler beispielhaft und nicht einschränkend auszulegen.

Fig. 8 skizziert eine beispielhafte Clamp-On-Ultraschall-Durchflussmessstelle 1 mit einem Messrohr 2, einer erfindungsgemäßen Ultraschallwandleranordnung 10, einen Trägerkörper 30 zum Halten der Ultraschallwandleranordnung, einen Krümmungssensor 4 zum Bestimmen einer Messrohrkrümmung und eine elektronische Mess-/Betriebsschaltung zu Betreiben der Ultraschallwandler, des Krümmungssensors und zum Bereitstellen von Durchflussmesswerten. Eine Clamp-On-Ultraschall-Durchflussmessstelle muss keinen Krümmungssensor aufweisen.

Fig. 9 skizziert einen Aufbau eines Krümmungssensors 4, mittels welchem ein Messrohraußendurchmesser bestimmt werden kann. Bei Kenntnis des Messrohraußendurchmessers und einer Messrohrwandstärke lässt sich ein zu verwendendes Ultraschallwandlerpaar vorbestimmen. Ein Krümmungssensor weist einen Abstandssensor 4.1 und einen Abstandshalter 4.2 auf, welcher Abstandshalter einen Zentralbereich 4.21 und zwei vom Zentralbereich abgewinkelte Enden 4.22 aufweist. Der Abstandshalter wird parallel zu einem Messrohrquerschnitt des Messrohrs 2 an das Messrohr angelegt, wobei der Zentralbereich einen messrohraußendurchmesserabhängigen Abstand zu einer Messrohraußenfläche aufweist. Dieser Abstand wird mit dem im Zentralbereich angebrachten Abstandssensor 4.1 ausgemessen. Ein solcher Sensor kann beispielsweise ein Ultraschallsensor oder ein optischer Sensor sein.

Anstatt der in Fig. 5 gezeigten V-förmigen Ultraschallsignalwege mit einer Reflektion an der zweiten Messrohrseite 2.12 können auch W-förmige Signalwege mit zwei Reflektionen an der zweiten Messrohrseite und einer dazwischenliegenden Reflektion an der ersten Messrohrseite 2.11 gewählt werden. Dies kann vorteilhaft sein bei kleinen Messrohrdurchmessern oder wenn durch Ultraschallsignaleinkopplung verursachte Messrohrschwingungen bei Eintreffen bei einem zum Empfang bestimmten Ultraschallwandler zeitlich überlagert sind mit Ultraschallsignalen, welche entlang eines V-förmigen Ultraschallsignalpfads laufen.

Eine Inbetriebnahme der Clamp-On-Ultraschall-Durchflussmessstelle erfordert ein Bestimmen eines Ultraschallwandlerpaars umfassend einen ersten Ultraschallwandler und einen zweiten Ultraschallwandler. Dazu kann wie bereits erwähnt mittels eines dritten Ultraschallwandlers ein Messrohrinnendurchmesser sowie eine Messrohrwandstärke bestimmt werden und dadurch ein Ultraschallwandlerpaar bestimmt werden. Alternativ oder zusätzlich kann auch wie bereits erwähnt ein Krümmungssensor eingesetzt werden. Alternativ oder zusätzlich können mehrere erste und/oder zweite Ultraschallwandler gleichzeitig oder zeitlich versetzt Ultraschallsignale aussenden. Eine Auswahl eines Ultraschallwandlerpaars kann dann beispielsweise anhand einer Ultraschallsignalamplitude, welche mittels zum Empfang bestimmten Ultraschallwandlern gemessen wird, bestimmt werden. Zwecks Unterscheidung können verschiedene zum Aussenden von Ultraschallsignalen verwendete Ultraschallwandler den Ultraschallsignalen jeweils ein oder mehrere Merkmale aufprägen. Beispielsweise kann bei gepulsten Ultraschallsignalen eine Zentralfrequenz charakteristisch sein. Alternativ oder zusätzlich kann beispielsweise können Ultraschallsignale unterschiedlichen Signalchirp aufweisen.

Bei der Inbetriebnahme kann auch ein Medium durch das Messrohr geführt und eine Laufzeitdifferenzenmessung von Ultraschallsignalen durchgeführt werden. Dabei können Ultraschallsignale ohne oder zu geringer Laufzeitdifferenz von einer Berücksichtigung ausgeschlossen werden. Solche Signale sind beispielsweise Signale, welche von einem ursprünglichen Ultraschallsignal in das Messrohr eingekoppelt werden, ohne das Medium zu durchlaufen. Bei einem empfangenden Ultraschallwandler können also ausgehend von einem ursprünglichen Ultraschallsignal mehrere durch unterschiedliche Reflektionen verursachte Ultraschallsignale zeitlich überlagert oder zeitlich versetzt eintreffen.

## Bezugszeichenliste

| 1 | Clamp-On-Ultraschall-Durchflussmessstelle |
| 2 | Messrohr |
| 2.11 | erste Messrohrseite |
| 2.12 | zweite Messrohrseite |
| 2.2 | Messrohrachse |
| 3 | elektronische Mess-/Betriebsschaltung |
| 4 | Krümmungssensor |
| 4.1 | Abstandssensor |
| 4.2 | Abstandshalter |
| 4.21 | Zentralbereich |
| 4.22 | Ende |
| 10 | Ultraschallwandleranordnung |
| 20 | Ultraschallwandler |
| 20.1 | erster Ultraschallwandler |
| 20.2 | zweiter Ultraschallwandler |
| 20.3 | dritter Ultraschallwandler |
| 21 | Wandlerelement |
| 22 | Koppelelement |
| 22.1 | erste Kontaktfläche |
| 22.2 | zweite Kontaktfläche |
| 30 | Trägerkörper |
| Anz1 | erste Anzahl |
| Anz2 | zweite Anzahl |
| M1 | erste Menge |
| A1 | erster Abstand |
| A2 | zweiter Abstand |
| UP1 | erster Ultraschallsignalpfad |
| UP2 | zweiter Ultraschallsignalpfad |
| K1, K2 | Kreuzungspunkt |
| N | Normale |
| U1 - U9 | Ultraschallwandler |
| G1 | erste Gruppe |
| G2 | zweite Gruppe |
| G3 | dritte Gruppe |
| P | Parallele |

## Patentansprüche

1. Ultraschallwandleranordnung (10) einer Clamp-On-Ultraschall-Durchflussmessstelle (1) basierend auf dem Laufzeitdifferenzenprinzip umfassend:

   mehrere Ultraschallwandler (20), welche dazu eingerichtet sind, auf einer Außenseite eines Messrohrs (2) der Clamp-On-Durchflussmessstelle angeordnet zu werden,
   wobei die Ultraschallwandler (20) jeweils mindestens ein Wandlerelement (21) zum Erzeugen und/oder Empfangen von Ultraschallsignalen sowie ein Koppelelement (22) aufweisen, wobei das Koppelelement eine erste Kontaktfläche (22.1) und eine zweite Kontaktfläche (22.2) aufweist, wobei das Wandlerelement auf der ersten Kontaktfläche angeordnet ist, und wobei der Ultraschallwandler dazu eingerichtet ist, mittels der zweiten Kontaktfläche mit dem Messrohr kontaktiert zu werden,
   wobei die Ultraschallwandler dazu eingerichtet sind, Ultraschallsignale in das Messrohr einzustrahlen und/oder aus dem Messrohr austretende Ultraschallsignale zu empfangen,
   wobei die zweiten Kontaktflächen jeweils eine Normale (N) aufweisen, wobei die Normalen eine Ebene definieren, in welcher Ebene Ultraschallsignalpfade der Ultraschallsignale verlaufen,
   wobei erste Ultraschallwandler (20.1) parallel zueinander verlaufende erste Ultraschallsignalpfade (UP1) definieren, und wobei zweite Ultraschallwandler (20.2) parallel zueinander verlaufende zweite Ultraschallsignalpfade (UP2) definieren, wobei die Ultraschallsignalpfade in der Ebene verlaufen,
   wobei die Ultraschallsignalpfade der ersten Ultraschallwandler sowie der zweiten Ultraschallwandler im Koppelelement jeweils schräg zur zweiten Kontaktfläche verlaufen,
   wobei eine Richtung der ersten Ultraschallsignalpfade und eine Richtung der zweiten Ultraschallsignalpfade spiegelsymmetrisch zu einer der Normalen sind,
   wobei erste Ultraschallsignalpfade mit zweiten Ultraschallsignalpfaden Kreuzungspunkte (KP) in der Ebene aufweisen, wobei die Kreuzungspunkte Parallelen (P) besetzen, welche Parallelen in der Ebene senkrecht zu den Normalen verlaufen,
   wobei eine erste Gruppe (G1) zusammenhängender Ultraschallwandler ausschließlich erste Ultraschallwandler mit einer ersten Anzahl (Anz1) aufweist, und wobei eine zweite Gruppe (G2) zusammenhängender Ultraschallwandler ausschließlich zweite Ultraschallwandler mit einer zweiten Anzahl (Anz2) aufweist,

wobei benachbarte Ultraschallwandler der ersten Gruppe in Richtung der Parallelen jeweils erste Abstände (A1) zueinander aufweisen, und wobei benachbarte Ultraschallwandler der zweiten Gruppe in Richtung der Parallelen jeweils zweite Abstände (A2) zueinander aufweisen, wobei der erste Abstand und der zweite Abstand ungleich sind,

**dadurch gekennzeichnet, dass**

$2*A1 >= A2 >= 1.125*A1$, und insbesondere $1.75*A1 >= A2 >= 1.16*A1$, und bevorzugt $1.6*A1 >= A2 >= 1.25*A1$,

wobei ein Zusammenhang zwischen erstem Abstand (A1) und zweitem Abstand (A2) folgender Gleichung entspricht:

$(a+1)*A1=a*A2$ mit $b > a > 1$, a natürliche Zahl und b kleiner 9, und insbesondere kleiner 7, und bevorzugt kleiner 5.

2. Ultraschallwandleranordnung nach Anspruch 1,

wobei die Koppelelemente jeweils eine Längsachse (L) aufweisen, wobei die Längsachse jeweils einen Innenwinkel ($\alpha$) zur entsprechenden zweiten Kontaktfläche aufweist, wobei der Ultraschallsignalpfad im Koppelelement entlang der Längsachse verläuft,

wobei die Wandlerelemente eine radiale Ausdehnung (rA) aufweisen, wobei

$$rA > 3/(8*a)*A1*\sin(\alpha),$$

und insbesondere

$$rA > 1/(4*a)*A1*\sin(\alpha).$$

3. Ultraschallwandleranordnung nach Anspruch 1 oder 2,

wobei die Ultraschallwandleranordnung mindestens eine dritte Gruppe (G3) Ultraschallwandler mit zumindest einem ersten Ultraschallwandler und/oder zumindest einem zweiten Ultraschallwandler aufweist,

wobei mindestens ein mit einem ersten Ultraschallwandler der dritten Gruppe und/oder mit einem zweiten Ultraschallwandler der dritten Gruppe gebildeter Kreuzungspunkt eine mächtigste erste Menge (M1) äquidistanter Parallelen erweitert.

4. Ultraschallwandleranordnung nach einem der vorigen Ansprüche,

umfassend zumindest einen dritten Ultraschallwandler (20.3), welcher einen Signalpfad aufweist, welcher senkrecht zur zweiten Kontaktfläche verläuft.

5. Ultraschallwandleranordnung nach einem der vorigen Ansprüche,

wobei die Anordnung von einem Trägerkörper (30) gehalten ist, welcher Trägerkörper zum Positionieren und Halten der Ultraschallwandler eingerichtet ist.

6. Ultraschallwandleranordnung nach Anspruch 5, wobei die Ultraschallwandler im Trägerkörper jeweils einzeln gehalten sind.

7. Clamp-On-Ultraschall-Durchflussmessstelle (1) zum Messen einer Durchflussgeschwindigkeit eines durch ein Messrohr (2) strömenden Mediums umfassend:

das Messrohr (2) zum Führen eines Mediums mit einer Messrohrachse (2.1),

eine Ultraschallwandleranordnung (10) gemäß einem der vorigen Ansprüche, wobei die Ultraschallwandleranordnung parallel zur Messrohrachse ausgerichtet ist,

eine elektronische Mess-/Betriebsschaltung (3) zum Betreiben der Ultraschallwandler sowie zum Ermitteln und Bereitstellen von Messwerten der Durchflussgeschwindigkeit.

8. Clamp-On-Ultraschall-Durchflussmessstelle nach Anspruch 7,

umfassend einen Krümmungssensor (4) zur Bestimmung eines Außendurchmessers des Messrohrs,

wobei der Krümmungssensor einen Abstandssensor (4.1) und einen Abstandshalter (4.2) aufweist,

wobei der Abstandshalter einen Zentralbereich (4.21) und zwei an den Zentralbereich anschließende Enden (4.22) aufweist, wobei die Enden durch eine Biegung oder einen Knick oder einen Winkel vom Zentralbereich abgegrenzt sind,

wobei der Abstandshalter dazu eingerichtet ist, mittels der Enden mit dem Messrohr kontaktiert zu werden, wobei der Zentralbereich dazu eingerichtet ist, vom Messrohr beabstandet zu sein, und wobei ein Querschnitt oder Längsschnitt durch den Abstandshalter durch beide Enden dazu eingerichtet ist, parallel zu einem Messrohrquerschnitt zu verlaufen,

wobei der Abstandssensor im Zentralbereich am Abstandshalter angeordnet ist,

wobei die elektronische Mess-/Betriebsschaltung (3) dazu eingerichtet ist, den Abstandssensor zu betreiben.

9. Clamp-On-Ultraschall-Durchflussmessstelle nach Anspruch 8,
   wobei der Abstandssensor ein optischer oder akustischer Abstandssensor ist.

**Claims**

1. An ultrasonic transducer arrangement (10) for a clamp-on ultrasonic flow measuring point (1) based on the travel time difference principle, comprising:

   a plurality of ultrasonic transducers (20) which are adapted to be arranged on an outside of a measuring tube (2) of the clamp-on flow measuring point,
   wherein the ultrasonic transducers (20) each have at least one transducer element (21) for generating and/or receiving ultrasonic signals and a coupling element (22), wherein the coupling element has a first contact area (22.1) and a second contact area (22.2), wherein the transducer element is arranged on the first contact area, and wherein the ultrasonic transducer is adapted to come into contact with the measuring tube by means of the second contact area,
   wherein the ultrasonic transducers are adapted to radiate ultrasonic signals into the measuring tube and/or to receive ultrasonic signals coming from the measuring tube,
   wherein the second contact areas each have a normal (N), wherein the normals define a plane, in which plane ultrasonic signal paths of the ultrasonic signals run,
   wherein first ultrasonic transducers (20.1) define first ultrasonic signal paths (UP1) running parallel to one another, and wherein second ultrasonic transducers (20.2) define second ultrasonic signal paths (UP2) running parallel to one another, wherein the ultrasonic signal paths run in the plane,
   wherein the ultrasonic signal paths of the first ultrasonic transducers and of the second ultrasonic transducers in the coupling element each run obliquely to the second contact area,
   wherein a direction of the first ultrasonic signal paths and a direction of the second ultrasonic signal paths are mirror-symmetric to one of the normals,
   wherein first ultrasonic signal paths have crossing points (KP) with second ultrasonic signal path in the plane, wherein the crossing points possess parallels (P), which parallels run perpendicularly to the normals in the plane,
   wherein a first group (G1) of associated ultrasonic transducers exclusively has first ultrasonic transducers with a first number (Anz1), and wherein a second group (G2) of associated ultrasonic transducers has exclusively second ultrasonic transducers with a second number (Anz2),
   wherein adjacent ultrasonic transducers of the first group are each first distances (A1) from one another in the direction of the parallels, and wherein adjacent ultrasonic transducers of the second group are each second distances (A2) from one another in the direction of the parallels, wherein the first distance and the second distance are not the same,
   wherein
   $2*A1 >= A2 >= 1.125*A1$, and in particular $1.75*A1 >= A2 >= 1.16*A1$, and preferably $1.6*A1 >= A2 >= 1.25*A1$,
   wherein a relationship between the first distance (A1) and the second distance (A2) corresponds to the following equation:
   $(a+1)*A1 = a*A2$ where $b > a > 1$, a is a natural number and b is less than 9, and in particular less than 7, and preferably less than 5.

2. The ultrasonic transducer arrangement as claimed in claim 1,

   wherein the coupling elements each have a longitudinal axis (L), wherein the longitudinal axis in each case has an internal angle ($\alpha$) to the corresponding second contact area, wherein the ultrasonic signal path in the coupling element runs along the longitudinal axis,
   wherein the transducer elements have a radial expansion (rA), wherein

   $$rA > 3/(8*a)*A1*\sin(\alpha),$$

   and in particular

   $$rA > 1/(4*a)*A1*\sin(\alpha).$$

3. The ultrasonic transducer arrangement as claimed in claim 1 or 2,

   wherein the ultrasonic transducer arrangement has at least one third group (G3) of ultrasonic transducers with at least one first ultrasonic transducer and/or at least one second ultrasonic transducer,
   wherein at least one crossing point formed with a first ultrasonic transducer of the third group and/or with a second ultrasonic transducer of the third group extends a most powerful first quantity (M1) of equidistant parallels.

**4.** The ultrasonic transducer arrangement as claimed in one of the preceding claims, comprising at least one third ultrasonic transducer (20.3) which has a signal path which runs perpendicularly to the second contact area.

**5.** The ultrasonic transducer arrangement as claimed in one of the preceding claims, wherein the arrangement is held by a support body (30), which support body is adapted to position and hold the ultrasonic transducers.

**6.** The ultrasonic transducer arrangement as claimed in claim 5, wherein the ultrasonic transducers are each held individually in the support body.

**7.** A clamp-on ultrasonic flow measuring point (1) for measuring a flow speed of a medium flowing through a measuring tube (2) comprising:

the measuring tube (2) for guiding a medium with a measuring tube axis (2.1), an ultrasonic transducer arrangement (10) as claimed in one of the preceding claims, wherein the ultrasonic transducer arrangement is configured parallel to the measuring tube axis, an electronic measuring/operating circuit (3) for operation of the ultrasonic transducers and for determining and providing measurement values of the flow speed.

**8.** The clamp-on ultrasonic flow measuring point as claimed in claim 7,

comprising a curvature sensor (4) for determining an external diameter of the measuring tube, wherein the curvature sensor has a distance sensor (4.1) and a spacer (4.2), wherein the spacer has a central region (4.21) and two ends (4.22) adjoining the central region, wherein the ends are delimited from the central region by a bend or a kink or an angle, wherein the spacer is adapted to be brought into contact with the measuring tube by means of the ends, wherein the central region is adapted to be spaced apart from the measuring tube, and wherein a cross section or longitudinal section through the spacer through both ends is adapted to run parallel to a measuring tube cross section, wherein the distance sensor is arranged in the central region on the spacer, wherein the electronic measuring/operating circuit (3) is adapted to operate the distance sensor.

**9.** The clamp-on ultrasonic flow measuring point as claimed in claim 8,

wherein the distance sensor is an optical or acoustic distance sensor.

## Revendications

**1.** Agencement de transducteurs à ultrasons (10) d'un point de mesure de débit à ultrasons clamp-on (1) basé sur le principe de la différence de temps de transit, lequel agencement comprend :

plusieurs transducteurs à ultrasons (20), lesquels sont conçus pour être disposés sur un côté extérieur d'un tube de mesure (2) du point de mesure de débit clamp-on, les transducteurs à ultrasons (20) présentant chacun au moins un élément transducteur (21) destiné à générer et/ou à recevoir des signaux ultrasonores ainsi qu'un élément de couplage (22), l'élément de couplage présentant une première surface de contact (22.1) et une deuxième surface de contact (22.2), l'élément transducteur étant disposé sur la première surface de contact, et le transducteur à ultrasons étant conçu pour être mis en contact avec le tube de mesure au moyen de la deuxième surface de contact, les transducteurs à ultrasons étant conçus pour émettre des signaux ultrasonores dans le tube de mesure et/ou pour recevoir des signaux ultrasonores sortant du tube de mesure, les deuxièmes surfaces de contact présentant chacune une normale (N), les normales définissant un plan dans lequel s'étendent des chemins des signaux ultrasonores, des premiers transducteurs ultrasonores (20.1) définissant des premiers chemins de signaux ultrasonores (UP1) parallèles entre eux, et des deuxièmes transducteurs ultrasonores (20.2) définissant des deuxièmes chemins de signaux ultrasonores (UP2) parallèles entre eux, les chemins de signaux ultrasonores s'étendant dans le plan, les trajets de signaux ultrasonores des premiers transducteurs à ultrasons ainsi que des deuxièmes transducteurs à ultrasons dans l'élément de couplage s'étendant respectivement de manière oblique par rapport à la deuxième surface de contact, une direction des premiers trajets de signaux ultrasonores et une direction des deuxièmes trajets de signaux ultrasonores étant symétriques par rapport à l'une des normales, les premiers trajets de signaux ultrasonores présentant des points d'intersection (KP) dans le plan avec les deuxièmes trajets de signaux ultrasonores, les points d'intersection occupant des parallèles (P), lesquelles parallèles sont perpendiculaires aux normales dans le plan,
un premier groupe (G1) de transducteurs à ultrasons contigus comprenant exclusivement des premiers transducteurs à ultrasons avec un premier nombre (Anz1), et un deuxième groupe (G2) de transducteurs à ultrasons contigus comprenant exclusivement des deuxièmes transducteurs à ultrasons avec un deuxième nombre (Anz2),
des transducteurs à ultrasons voisins du premier groupe présentant dans la direction des parallèles respectivement des premières distances (A1) entre eux, et des transducteurs à ultrasons voisins du deuxième groupe présentant dans la direction des parallèles respectivement des deuxièmes distances (A2) entre eux, la première distance et la deuxième distance étant inégales,
**caractérisé en ce que**
$2*A1 >= A2 >= 1{,}125*A1$, et notamment $1{,}75*A1 >= A2 >= 1{,}16*A1$, et de préférence $1{,}6*A1 >= A2 >= 1{,}25*A1$,
où une relation entre la première distance (A1) et la deuxième distance (A2) correspond à l'équation suivante :
$(a+1)*A1 = a*A2$ avec $b > a > 1$, a étant un nombre naturel et b inférieur à 9, et notamment inférieur à 7, et de préférence inférieur à 5.

2. Agencement de transducteurs à ultrasons selon la revendication 1,

   pour lequel les éléments de couplage présentent chacun un axe longitudinal (L), l'axe longitudinal présentant respectivement un angle intérieur ($\alpha$) par rapport à la deuxième surface de contact correspondante, le trajet du signal ultrasonore dans l'élément de couplage s'étendant le long de l'axe longitudinal,
   les éléments transducteurs présentant une extension radiale (rA), où

   $$rA > 3/(8*a)*A1*\sin(\alpha),$$

   et notamment

   $$rA > 1/(4*a)*A1*\sin(\alpha).$$

3. Agencement de transducteurs à ultrasons selon la revendication 1 ou 2,

   pour lequel l'agencement de transducteurs à ultrasons présente au moins un troisième groupe (G3) de transducteurs à ultrasons avec au moins un premier transducteur à ultrasons et/ou au moins un deuxième transducteur à ultrasons,

au moins un point d'intersection formé avec un premier transducteur à ultrasons du troisième groupe et/ou avec un deuxième transducteur à ultrasons du troisième groupe élargissant un premier ensemble (M1) le plus important de parallèles équidistantes.

4. Agencement de transducteurs à ultrasons selon l'une des revendications précédentes,
   comprenant au moins un troisième transducteur à ultrasons (20.3), lequel présente un trajet de signal qui est perpendiculaire à la deuxième surface de contact.

5. Agencement de transducteurs à ultrasons selon l'une des revendications précédentes,
   pour lequel l'agencement est supporté par un corps de support (30), lequel corps de support est conçu pour positionner et supporter les transducteurs à ultrasons.

6. Agencement de transducteurs à ultrasons selon la revendication 5,
   pour lequel les transducteurs à ultrasons sont maintenus individuellement dans le corps de support.

7. Point de mesure de débit à ultrasons clamp-on (1) destiné à mesurer une vitesse de débit d'un produit s'écoulant à travers un tube de mesure (2), lequel point de mesure comprend :

   le tube de mesure (2) destiné à guider un produit avec un axe de tube de mesure (2.1),
   un agencement de transducteurs à ultrasons (10) selon l'une des revendications précédentes, l'agencement de transducteurs à ultrasons étant orientée parallèlement à l'axe du tube de mesure,
   un circuit électronique de mesure/d'exploitation (3) destiné à faire fonctionner les transducteurs à ultrasons ainsi que pour déterminer et mettre à disposition des valeurs mesurées de la vitesse d'écoulement.

8. Point de mesure de débit à ultrasons clamp-on selon la revendication 7,

   comprenant un capteur de courbure (4) destiné à déterminer un diamètre extérieur du tube de mesure,
   le capteur de courbure présentant un capteur de distance (4.1) et une entretoise (4.2),
   l'entretoise présentant une zone centrale (4.21) et deux extrémités (4.22) se raccordant à la zone centrale, les extrémités étant délimitées par une courbure ou un coude ou un angle par rapport à la zone centrale,
   l'entretoise étant conçue pour être mise en contact avec le tube de mesure au moyen des extrémités, la zone centrale étant conçue pour être espacée du tube de mesure, et une section transversale ou longitudinale de l'entretoise à travers les deux extrémités étant conçue pour être parallèle à une section transversale du tube de mesure,

le capteur de distance étant disposé dans la zone centrale sur l'entretoise,

le circuit électronique de mesure/d'exploitation (3) étant conçu pour faire fonctionner le capteur de distance.

9.  Point de mesure de débit à ultrasons clamp-on selon la revendication 8,

le capteur de distance étant un capteur de distance optique ou acoustique.

Fig. 1

Fig. 2

20.1    20.1    N    20.2    20.2

G

2β

A1    β    A2

UP1                             UP2    2

$d1/\cos(\beta)$    $d2/\cos(\beta)$

$d1$    $d2$

p1

p2-p1

p1    p2

p2

$d1/(2*\cos(\beta))$    $d2/(2*\cos(\beta))$    p1+p2

$$p1=d1/(2*\sin(\beta)) \qquad p2=d2/(2*\sin(\beta))$$

EP 3 894 800 B1

EP 3 894 800 B1

Fig. 3

Fig. 4

EP 3 894 800 B1

Fig. 5

2.11

U1  A1  U2  U3  A2  U4

2

2.12

K2  K1

P2

P1

EP 3 894 800 B1

Fig. 6

G3

G1

G2

2.11

2

20.1   20.3   20.2   20.1   20.1   20.1   20.2   20.2   20.2

2.2

2.12

EP 3 894 800 B1

Fig. 7

G3        G1        G2        30

Fig. 8

10        30        3        4

2        1

Fig. 9

4.1        4        4.2

4.21        4.22

4.22        2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008029772 A1